(19) Europäisches Patentamt
European Patent Office
Office européen des brevets

(11) **EP 3 527 966 B1**

(12) **EUROPÄISCHE PATENTSCHRIFT**

(45) Veröffentlichungstag und Bekanntmachung des Hinweises auf die Patenterteilung:
**22.12.2021  Patentblatt 2021/51**

(51) Int Cl.:
*G01M 3/04* *(2006.01)*   *G01M 3/18* *(2006.01)*
*G01M 3/22* *(2006.01)*

(21) Anmeldenummer: **18156742.1**

(22) Anmeldetag: **14.02.2018**

(54) **VERFAHREN UND VORRICHTUNG ZUM BESTIMMEN EINER LECKAGEANGABE EINES MIT PRÜFFLUID GEFÜLLTEN TESTOBJEKTS**

METHOD AND DEVICE FOR DETERMINING INDICATION OF A LEAK OF A TEST OBJECT FILLED WITH TEST FLUID

PROCÉDÉ ET DISPOSITIF DE DÉTERMINATION D'UNE INDICATION DE FUITE D'UN OBJET D'ESSAI REMPLI DE FLUIDE D'ESSAI

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**21.08.2019  Patentblatt 2019/34**

(73) Patentinhaber: **3S GmbH**
**66115 Saarbrücken (DE)**

(72) Erfinder:
• **BECK, Sebastian**
**66121 Saarbrücken (DE)**
• **CONRAD, Thorsten**
**66271 Bliesransbach (DE)**
• **PETER, Jens**
**66111 Saarbrücken (DE)**

• **BAUR, Tobias**
**66111 Saarbrücken (DE)**
• **SAUERWALD, Tilman**
**66123 Saarbrücken (DE)**
• **SCHÜTZE, Andreas**
**66386 St. Ingbert (DE)**
• **SCHULTEALBERT, Caroline**
**66111 Saarbrücken (DE)**

(74) Vertreter: **Banse & Steglich**
**Patentanwälte PartmbB**
**Patentanwaltskanzlei**
**Herzog-Heinrich-Straße 23**
**80336 München (DE)**

(56) Entgegenhaltungen:
**DE-B4- 10 316 332     US-A1- 2007 229 294**

EP 3 527 966 B1

**Beschreibung**

Technisches Gebiet

Die Erfindung betrifft Verfahren zur Leckageprüfung von Testobjekten, und insbesondere Maßnahmen zur Erhöhung einer Genauigkeit einer Leckagedetektion einer Leckage eines Testobjekts mithilfe einer Detektionseinrichtung.

Technischer Hintergrund

Zur Prüfung der Dichtheit eines Testobjekts sehen herkömmliche Verfahren vor, dieses mit einem Prüffluid gefüllt in eine Prüfkammer einzubringen. Während einer Prüfdauer wird aus dem Testobjekt in die Prüfkammer ausgetretenes Prüffluid in geeigneter Weise einer Detektionseinrichtung zugeführt, um eine Menge des ausgetretenen Prüffluids zu messen.

Beispielsweise ist aus der Druckschrift DE 103 16 332 B4 bekannt, eine Leckagemessung nach dem Prinzip der Fließinjektionsanalyse durchzuführen. Dabei wird aus dem Testobjekt austretendes Prüffluid in der Prüfkammer gesammelt und anschließend zu der Detektionseinrichtung geführt. Die Detektionseinrichtung misst dann die Konzentration des Prüffluids in dem Trägerfluid der Prüfkammer. Bei einer solchen Anordnung ist die Nachweisschwelle durch die Empfindlichkeit der Detektionseinrichtung maßgeblich bestimmt.

Zur Verbesserung der Empfindlichkeit derartiger Verfahren sehen beispielsweise die Druckschriften US 3,956,923 A und WO 2010/124907 A vor, das Testobjekt in der Prüfkammer einem Vakuum auszusetzen, um durch eine Leckage bewirkte Austrittsströmung zu verstärken und somit die Konzentration des Prüffluids in der Testkammer zu erhöhen.

Aus der Druckschrift DE 10 2006 016747 A1 ist ein Verfahren zur Detektion einer Leckage in einer Spüleinrichtung bekannt. Dabei wird ein zu prüfendes Bauteil in der Spüleinrichtung angeordnet, ein Spülgas durch die Spüleinrichtung durchgeleitet und das aus der Spüleinrichtung austretende Leckagegas in dem Spülgas mit einer Detektoreinrichtung detektiert.

Die Druckschrift US 2007/229294 A1 betrifft ein Leckage-Detektionssystems für eine Batterie, bei dem ein Gassensor vorgesehen ist, um aus der Batterie austretendes Gas im Falle einer Leckage zu detektieren. Der Gassensor wird in herkömmlicher Weise betrieben, d.h. durch Messung einer elektrischen Eigenschaft des Gassensors nach einer Beaufschlagung mit einem Leckage-Massenstrom.

Es ist Aufgabe der vorliegenden Erfindung, ein Verfahren zur Messung einer Leckage eines mit einem Prüffluid gefüllten Testobjekt sowie eine Leckage-Messvorrichtung zur Verfügung zu stellen, die eine verbesserte Genauigkeit der Messung der Leckage aufweisen.

Offenbarung der Erfindung

Diese Aufgabe wird durch das Verfahren zum Bestimmen einer Leckageangabe eines mit einem Prüffluid gefüllten Testobjekts gemäß Anspruch 1 sowie durch die Leckagemessvorrichtung gemäß dem nebengeordneten Anspruch gelöst.

Weitere Ausgestaltungen sind in den abhängigen Ansprüchen angegeben.

Gemäß einem ersten Aspekt ist ein Verfahren zur Leckagemessung eines mit Prüffluid gefüllten bzw. füllbaren Testobjekts vorgesehen, mit folgenden Schritten:

- Anordnen des Testobjekts in einer abgeschlossenen mit einem Referenzfluid gefüllten Prüfkammer, um etwaig austretendes Prüffluid in dem in der Prüfkammer befindlichen Referenzfluid anzureichern;
- Betreiben eines auf zumindest einen Bestandteil des Prüffluids sensitiven Fluidsensors, um diesen durch Energiezufuhr durch Erwärmen auf eine Anregungstemperatur, durch Beaufschlagen mit einem elektrischen Feld, durch optische Anregung oder durch elektrochemisches Pumpen anzuregen, so dass eine ein thermodynamisches Gleichgewicht übersteigende Menge chemischer Reaktionspartner auf einer Sensoroberfläche des Fluidsensors ausgebildet wird, wobei der Fluidsensor nach erfolgter Anregung in einen Messzustand gebracht wird, in dem ein thermodynamisches Ungleichgewicht hinsichtlich chemischer Reaktionspartner auf der Sensoroberfläche des Fluidsensors zumindest während einer Messzeitdauer besteht, wobei die das thermodynamische Gleichgewicht übersteigende Menge chemischer Reaktionspartner eine elektrische Eigenschaft des Fluidsensors beeinflusst;
- nach erfolgter Anregung des Fluidsensors, Beaufschlagen der Sensoroberfläche zumindest eines Teils des etwaig mit Prüffluid kontaminierten Referenzfluids für eine Messzeitdauer, so dass das thermodynamische Ungleichgewicht durch Beaufschlagen mit entsprechenden Bestandteilen des Prüffluids abgebaut wird und sich aufgrund einer Wechselwirkung des Prüffluids mit den Reaktionspartnern eine Änderung einer elektrischen Eigenschaft ergibt, und

- Ermitteln einer Leckageangabe abhängig von der Änderung der elektrischen Eigenschaft des Fluidsensors aufgrund des Beaufschlagen der Sensoroberfläche mit dem kontaminierten Referenzfluid während einer Messzeitdauer.

Eine Idee des obigen Verfahrens besteht darin, das Testobjekt in eine Prüfkammer einzubringen und einen Fluidsensor mit einer Stoffmenge an zu detektierendem Bestandteilen zu beaufschlagen, die während einer Zeitdauer aus dem Testobjekt ausgetreten ist. Der Fluidsensor wird zuvor durch eine Energiezufuhr so angeregt, dass eine Sensoroberfläche reaktiver wird. Eine Modellvorstellung ist, dass der Fluidsensor an einer Sensoroberfläche Reaktionsstellen in Form chemischer Reaktionspartner ausbildet, die in ihrer Anzahl von der Anzahl eines thermodynamischen Gleichgewichts abweichen. Ein solcher Zustand wird im Folgenden als Ungleichgewichtszustand bezeichnet. Als Abbau des Ungleichgewichtszustands wird im Folgenden eine Änderung der Anzahl verstanden, bei der der Betrag der Differenz zwischen tatsächlicher Anzahl und der Gleichgewichtsanzahl kleiner wird.

Das Material des Fluidsensors und/oder des Prüffluids sind so gewählt, dass die sich ausbildenden Reaktionsstellen mit Bestandteilen des Prüffluids reagieren können. Befindet sich der Fluidsensor bei Beaufschlagen seiner Sensoroberfläche im thermodynamischen Ungleichgewicht, so wird dieses durch Beaufschlagen mit den entsprechenden Bestandteilen des Prüffluids abgebaut. Die sich ändernde elektrische Eigenschaft des Halbleitersensors kann gemessen und ausgewertet werden, um eine Leckageangabe zu erhalten.

Chemische Reaktionspartner können geladene und ungeladene chemisorbierte Atome oder Moleküle, physisorbierte Atome oder Moleküle, oberflächliche Fehlstellen im Gitter sowie besetzte oder freie elektronische Oberflächenzustände sein

Sowohl das Prüffluid als auch das Referenzfluid können flüssig oder gasförmig sein. Das Referenzfluid sollte so gewählt sein, dass es chemisch inert bezüglich des Prüffluids und bezüglich der Reaktionsstellen ist. Die Reaktionsstellen können Stellen mit Oberflächenladungen, insbesondere negativen Oberflächenladungen in Form von geladenen Sauerstoffatomen oder - molekülen oder positiv geladenen Oberflächenladungen in Form von positiv geladenen Wasserstoffatomen oder -molekülen sein. Diese stellen chemische Reaktionspartner dar. Der Abbau der Reaktionsstellen durch etwaig austretendes Prüffluid in Richtung des thermodynamischen Gleichgewichts erfolgt direkt abhängig von der Menge des ausgetretenen Prüffluides, so dass eine genaue Detektion des Maßes einer etwaigen Leckage möglich ist. Durch die Möglichkeit, mit dem obigen Verfahren Konzentration des Prüffluids im Bereich von wenigen ppb zuverlässig nachzuweisen, können auch sehr geringe Leckageströme sehr präzise gemessen werden.

Ein weiterer Vorteil des obigen Messverfahrens besteht darin, dass Signale aus dem Referenzfluid besser kompensiert werden können. Während die Sensitivität für Fluidsensoren bei konstanter Temperatur stark mit der Fluidkonzentration des Prüffluids abnimmt, bleibt die Sensitivität beim zyklischen Betrieb von Phasen der Anregung und der Messung über einen weiten Bereich proportional zur Fluidkonzentration. Auch ist die Drift des Sensorsignals bei dem obigen Verfahren sehr gering.

Weiterhin kann das Referenzfluid in der Prüfkammer durch etwaig aus dem Testobjekt austretendes Prüffluid für eine vorbestimmte Akkumulationszeit angereichert werden und anschließend das kontaminierte Referenzfluid zur Beaufschlagung der Sensoroberfläche des Fluidsensors mit einem konstanten Volumenstrom, insbesondere durch Hindurchleiten von weiterem Referenzfluid durch die Prüfkammer, zugeführt werden.

Insbesondere kann die Leckageangabe einer Angabe über die während der Akkumulationszeit ausgetretenen Stoffmenge des Prüffluids oder einem Leckagestrom des Prüffluids entsprechen und/oder die Leckageangabe weiterhin abhängig von dem Teil des Volumens des Referenzfluids, mit dem die Sensoroberfläche beaufschlagt wird, aus der Prüfkammer ermittelt werden.

Es kann vorgesehen sein, dass die Änderung der elektrischen Eigenschaft einer Leitwertsänderung, einer Kapazitätsänderung oder einer Änderung eines Sättigungsstroms des Fluidsensors entspricht, wobei diese Änderung der elektrischen Eigenschaft einer Stoffmenge an ausgetretenem Prüffluid zugeordnet wird, wobei die Leckageangabe insbesondere abhängig von der Stoffmenge und abhängig von der Akkumulationszeit angegeben wird.

Gemäß einer alternativen Ausführungsform kann das Referenzfluid in der Prüfkammer durch etwaig aus dem Testobjekt austretendes Prüffluid für die Messzeitdauer angereichert werden, wobei der Fluidsensor in der Prüfkammer angeordnet und so die Sensoroberfläche durch das austretende Prüffluid während der Messzeitdauer beaufschlagt wird.

Insbesondere kann die Änderung der elektrischen Eigenschaft einer Leitwertsänderung, einer Kapazitätsänderung oder einer Änderung eines Sättigungsstromes des Fluidsensors entsprechen, wobei die Änderung der elektrischen Eigenschaft einer Stoffmenge an ausgetretenem Prüffluid zugeordnet wird, wobei die Leckageangabe insbesondere abhängig von der Stoffmenge und abhängig von der Messzeitdauer angegeben wird.

Es kann vorgesehen sein, dass eine Leitwertsänderung, eine Kapazitätsänderung oder eine Änderung eines Sättigungsstroms des Fluidsensors während des Beaufschlagens des Fluidsensors überwacht wird, wobei die Messung gestoppt wird, wenn die gemessene Änderung einen vorgegeben Schwellenwert erreicht, und wobei die Messzeitdauer durch den Zeitpunkt des Beginns des Beaufschlagens des Fluidsensors und den Zeitpunkt des Stoppens der Messung bestimmt ist, wobei die Leckageangabe abhängig von der Messzeitdauer angegeben wird.

Weiterhin kann der Fluidsensor betrieben werden, um die Energiezufuhr durch Erwärmen auf eine Anregungstemperatur, durch Beaufschlagen mit einem elektrischen Feld (Elektroadsorption), durch optische Anregung oder durch elektrochemisches Pumpen bereitzustellen. Dadurch wird ein zyklischer Betrieb des Leckagemessverfahrens gewährleistet. Im Fall der zyklischen Variation der Temperatur wird dies im Folgenden als temperaturzyklischer Betrieb bezeichnet.

Insbesondere kann der Fluidsensor nach erfolgter Anregung in einen Messzustand gebracht werden, in dem ein thermodynamisches Ungleichgewicht hinsichtlich chemischer Reaktionspartner auf der Sensoroberfläche des Fluidsensors zumindest während der Messzeitdauer besteht und der insbesondere durch Einstellen einer vorbestimmten Detektionstemperaturerreicht wird.

Gemäß einer Ausführungsform kann das Prüffluid einen reduzierenden Bestandteil, insbesondere Wasserstoff und/oder Ethanol, enthalten. Der Fluidsensor kann als Halbleitersensor, insbesondere als resistiver Halbleitergassensor oder gassensitiver Feldeffekttransistor, ausgebildet sein, um durch eine Temperaturmodulation eine das thermodynamische Gleichgewicht übersteigende Menge von Reaktionspartnern auf der Sensoroberfläche auszubilden, insbesondere als chemisorbierten Sauerstoff, der mit dem Wasserstoff aus dem Prüffluid reagieren kann. Durch Absenken der Temperatur werden daher die Fehlstellen zur Rekombination mit dem Prüffluid bereitgestellt.

Weiterhin kann das Referenzfluid vor Einbringen in die Prüfkammer so gewählt sein, dieses keine Bestandteile aufweist, auf die der Fluidsensor sensitiv ist, oder wobei das Referenzfluid vor Einbringen in die Prüfkammer gereinigt und/oder gefiltert wird, um den Anteil an Bestandteilen des Referenzfluids zu reduzieren oder zu eliminieren, auf die der Fluidsensor sensitiv ist.

Es kann vorgesehen sein, dass das kontaminierte Referenzfluid vor dem Beaufschlagen auf die Sensoroberfläche gereinigt oder gefiltert wird, um Stoffe, die nicht Bestandteil des Prüffluids sind aber auf die der Fluidsensor sensitiv ist, zu entfernen. Alternativ oder zusätzlich kann der Sensor gegen das Eindringen von Störgasen geschützt sein, z.B. durch halbdurchlässige Filter. Auch kann der Fluidsensor gegen Störfluide unempfindlich gemacht werden, insbesondere durch physikalische oder chemische Veränderung der Sensoroberfläche.

Es kann eine Referenzangabe ermittelt werden, indem der auf das Prüffluid sensitive Fluidsensor zum Ausbilden einer ein thermodynamisches Gleichgewicht übersteigenden Menge an Reaktionspartnern auf einer Sensoroberfläche betrieben wird und der Sensoroberfläche nicht kontaminiertes Referenzfluid in einer Menge zugeführt wird, die während der Messung dem der Sensoroberfläche zugeführten Teil des kontaminierten Referenzfluids aus der Prüfkammer entspricht, und die Leckageangabe abhängig von der Referenzangabe ermittelt wird.

Gemäß einem weiteren Aspekt ist eine Messvorrichtung zur Leckagemessung eines Testobjekts vorgesehen, umfassend:

- eine mit einem Referenzfluid befüllbare Prüfkammer zum Aufnehmen des Testobjekts;
- ein auf das Prüffluid sensitiver Fluidsensor, der ausgebildet ist, um diesen durch Energiezufuhr anzuregen und eine ein thermodynamisches Gleichgewicht übersteigende Menge chemischer Reaktionspartner auf einer Sensoroberfläche des Fluidsensors auszubilden, wobei die das thermodynamische Gleichgewicht übersteigende Menge chemischer Reaktionspartner eine elektrische Eigenschaft des Fluidsensors beeinflusst;
- eine Steuereinheit, die ausgebildet ist, um

    ◦ den Fluidsensor durch Energiezufuhr anzuregen
    ◦ nach erfolgter Anregung des Fluidsensors die Sensoroberfläche zumindest mit einem Teil des etwaig mit Prüffluid kontaminierten Referenzfluids für eine Messzeitdauer zu beaufschlagen, so dass sich aufgrund einer Wechselwirkung des Prüffluids mit den Reaktionspartnern eine Änderung einer elektrischen Eigenschaft ergibt,
    ◦ eine Leckageangabe abhängig von der Änderung der elektrischen Eigenschaft des Fluidsensors aufgrund des Beaufschlagen der Sensoroberfläche mit dem kontaminierten Referenzfluid zu ermitteln.

Weiterhin kann der Fluidsensor einen Halbleitergassensor aufweisen, bei dem sich als die elektrische Eigenschaft ein elektrischer Leitwert ändert, wobei ein logarithmierender Verstärker vorgesehen ist, um ein elektrisches Messsignal zu messen, das den logarithmierten Leitwert angibt.

Kurzbeschreibung der Zeichnungen

Ausführungsformen werden nachfolgend anhand der beigefügten Zeichnungen näher erläutert. Es zeigen:

Figur 1      eine schematische Darstellung einer Leckage-Messvorrichtung zum Bestimmen einer Leckageangabe für ein zu prüfendes Testobjekt;

Figur 2      ein Flussdiagramm zur Veranschaulichung eines Verfahren zum Durchführen eines Messzyklus für ein Messen einer Leckage eines Testobjekts: und

Figur 3     eine schematische Darstellung einer weiteren Leckage-Messvorrichtung zum Bestimmen einer Leckageangabe für ein zu prüfendes Testobjekt;

Beschreibung von Ausführungsformen

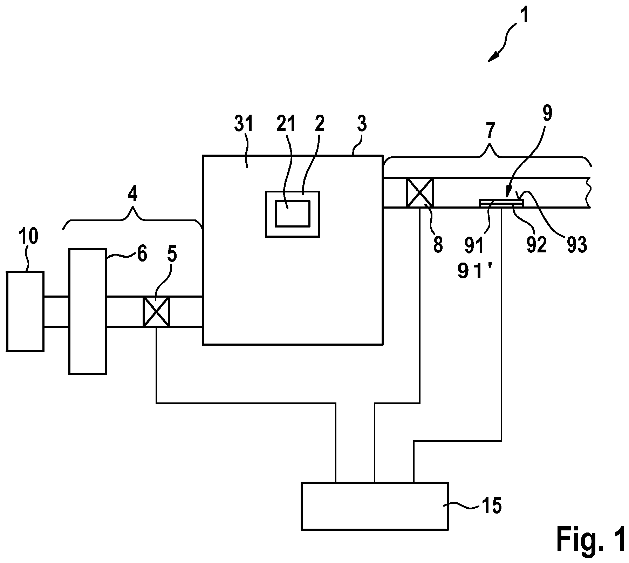

Figur 1 zeigt eine schematische Darstellung einer Leckagemessvorrichtung 1 zum Messen einer Dichtheit eines Testobjekts 2, das in einem abgeschlossenen Innenraum des Testobjekts 2 mit einem Prüffluid 21 gefüllt ist. Das Prüffluid 21 kann flüssig oder gasförmig sein und beispielsweise Formiergas, Ethanol, Wasserstoff, Wasserstoffverbindungen oder dergleichen aufweisen.

Das Testobjekt 2 befindet sich in einer abschließbaren Prüfkammer 3, die mit einem Referenzfluid 31 gefüllt ist. Das Referenzfluid 31 kann flüssig oder gasförmig ausgebildet sein und besteht vorzugsweise aus gereinigter Luft.

Es ist eine Referenzfluidzufuhr 4 vorgesehen, um das Referenzfluid 31 in die Prüfkammer 3 zu leiten. Stromaufwärts der Referenzfluid-Zuführung 4 ist eine Fluidpumpe 10 vorgesehen, um das Referenzfluid in die Prüfkammer 3 zu transportieren. Die Referenzfluidzufuhr 4 kann ein Zuführventil 5 aufweisen, um die Zufuhr des Referenzfluids 31 in die Prüfkammer 3 zu bewirken oder die Prüfkammer 3 zu verschließen. Weiterhin kann die Referenzfluidzufuhr 4 ein Referenzfluid-Aufbereitungselement 6 aufweisen, um das zuzuführende Referenzfluid 31 zu reinigen und insbesondere reaktive Bestandteile bzw. Bestandteile, die auch in dem Prüffluid 21 vorhanden sind, herauszufiltern.

Weiterhin kann die Prüfkammer 3 mit einer Fluidabführung 7 versehen sein, die ein Abführventil 8 aufweist, um die Prüfkammer 3 zu verschließen, oder eine Abführung des in der Prüfkammer 3 befindlichen, gegebenenfalls mit Prüffluid 21 kontaminierten Referenzfluids zu ermöglichen. Die Abführung 7 ermöglicht den Transport des in der Prüfkammer 3 befindlichen Fluids zu einer Sensoroberfläche 91 einer Fluidsensoreinrichtung 9.

Die Fluidsensoreinrichtung 9 kann einen Fluidsensor 91, insbesondere einen Halbleitersensor, wie z.B. einen Halbleitergassensor 91, oder einen sonstigen Stoffsensor, aufweisen (bei einem Gas als Referenzfluid). Der Fluidsensor 91 der Fluidsensoreinrichtung 9 weist eine Sensoroberfläche 93 auf, die auf mindestens einen Bestandteil des Prüffluids 21 empfindlich ist. Der Fluidsensor 91 ist ausgebildet, um bei Energiezufuhr Reaktionsstellen auf der Sensoroberfläche auszubilden. Die Menge an Reaktionsstellen auf der Sensoroberfläche 93 besonders an deren Korngrenzen des Fluidsensors 91 bestimmt eine elektrische Größe des Fluidsensors 91, insbesondere dessen elektrische Leitwert.

Die Reaktionsstellen können beispielsweise oxidierend oder reduzierend sein und entsprechend mit oxidierbaren Anteilen bzw. reduzierbaren Anteilen eines mit der Sensoroberfläche 93 in Kontakt tretenden Stoffes reagieren, so dass die betreffenden Reaktionsstellen dadurch eliminiert werden.

Weiterhin ist der Fluidsensor 9 ausgebildet, so dass durch Energiezufuhr die Reaktionsstellen ausgebildet werden können, so dass sich diese in einem thermodynamischen Ungleichgewicht befinden. Grundsätzlich kann eine das thermodynamische Gleichgewicht übersteigende Menge von Reaktionsstellen durch Energiezufuhr aus verschiedenen Quellen realisiert werden, wie z.B. durch Wärmezufuhr, durch Beaufschlagen mit einem elektrischen Feld (Elektroadsorption), durch optische Anregung, durch elektrochemische Pumpe (z.B. mittels ZrO2). Durch Vorgabe einer geeigneten Detektionstemperatur wird das thermodynamische Ungleichgewicht ohne Zufuhr von reaktiven Stoffen zur Sensoroberfläche nur langsam innerhalb von Minuten abgebaut.

In der vorliegenden Ausführungsform wird nachfolgend von einem Halbleitergassensor 91' als Fluidsensor 91 ausgegangen. Dieser kann durch einen Temperaturzyklus, d.h. durch Erwärmen auf eine Anregungstemperatur, um die Energiezufuhr zum Ausbilden des thermodynamischen Ungleichgewichts bereitzustellen, und anschließendes Abkühlen auf die Detektionstemperatur durchgeführt werden. Dazu ist der Halbleitergassensor 91' mit einer Heizeinrichtung 92 versehen, um die Temperaturänderungen des Halbleitergassensors 91' zu bewirken. Der Halbleitergassensor 91' kann beispielsweise eine Zinndioxidoberfläche ($SnO_2$) aufweisen, die zum Detektieren von flüchtigen organischen Verbindungen (VOC: Volatile Organic Compounds) geeignet ist. Die Sensoroberfläche 93 reagiert auf eine Vielzahl verschiedener reduzierender und oxidierender Stoffe bereits in Konzentrationen von wenigen ppm, indem sich eine elektrische Eigenschaft des Halbleitergassensors 91' ändert, insbesondere dessen Leitwert. Grundsätzlich erfolgt die Detektion durch Reaktion der VOCs bzw. der zu detektierenden Stoffe mit den Reaktionsstellen an der Sensoroberfläche 93. Bei Verwendung von $SnO_2$ als Sensormaterial entsprechen die Reaktionsstellen Stellen mit negativ geladenem Sauerstoff, die in der Lage sind, oxidierbare Gase besonders molekularen Wasserstoff und wasserstoffhaltige organische Verbindungen zu detektieren.

Für das nachfolgend beschriebene Messverfahren wird nun die Eigenschaft des Fluidsensors 91 genutzt, nach der sich ein stationärer Gleichgewichtszustand der Reaktionsstellen erst verzögert nach Wegnahme der Anregung (Energiezufuhr) und Einstellen der Detektionstemperatur einstellt. Bei Anregung des Fluidsensors 91 durch Energiezufuhr kann die Zeitkonstante der Wegnahme der Energiezufuhr viel geringer vorgesehen werden als die Relaxation zurück in den stationären thermodynamischen Gleichgewichtszustand der Reaktionsstellen. Für die Anregung mithilfe eines Temperaturzyklus kann also die Zeitkonstante der Reduzierung von der Anregungstemperatur zu der Detektionstemperatur viel geringer vorgesehen werden als die Relaxation zurück in den stationären thermodynamischen Gleichgewichtszustand der Reaktionsstellen.

Die Relaxation kann von einigen Sekunden bis hin zu Minuten dauern. Wird beispielsweise ein Halbleitergassensor 91' zuerst auf eine Anregungstemperatur erwärmt, um Reaktionsstellen auszubilden und anschließend zum Start der Messung schnell auf die Detektionstemperatur abgekühlt, ändert sich entsprechend auch der Leitwert des Halbleitergassensors 91'. Insbesondere können die Wegnahme der Energiezufuhr bzw. der Temperatursprung auf die Detektionstemperatur so schnell ausgeführt werden, dass die Relaxation der Reaktionsstellen deutlich verzögert erfolgt und somit unmittelbar nach Erreichen der Detektionstemperatur für eine vorbestimmte Zeitdauer, von z.B. zwischen 30 Sekunden und 5 Minuten vernachlässigbar ist.

Bei Aufbringen des Prüffluids 21, das oxidierbare Bestandteile aufweist, auf die Sensoroberfläche setzen sich Moleküle des Prüffluids 21 reaktiv an die Reaktionsstellen an, d.h. sie eliminieren/reduzieren die Reaktionsstellen, und reduzieren somit die Anzahl an freien Reaktionsstellen. Da die Anzahl der freien Reaktionsstellen (Maß des thermodynamischen Ungleichgewichts) den Leitwert des Halbleitergassensors 91' beeinflusst, reduziert sich dadurch der messbare Leitwert des Halbleitergassensors 91'. Daher kann in einer Hochtemperaturphase durch Erwärmen auf die Anregungstemperatur geladener Sauerstoff auf der Sensoroberfläche 93 angereichert werden und Reaktionsstellen durch eine schnelle Abkühlung auf die Detektionstemperaturgeschaffen werden, so dass der Halbleitergassensor 91' eine Empfindlichkeit für oxidierbare Stoffe aufweist, die mit den Reaktionsstellen reagieren können.

Weiterhin ist eine Steuereinrichtung 15 vorgesehen, die zur Ansteuerung des Zuführventils 5, des Abführventils 8 und zur Messung der elektrischen Größe der Fluidsensoreinrichtung 9 ausgebildet ist. Weiterhin führt die Steuereinrichtung 15 ein Verfahren aus, um eine Leckageangabe für das in die Prüfkammer 3 einzubringende Testobjekt 2 zu bestimmen. Die Steuereinrichtung 15 umfasst weiterhin eine Vorrichtung zur Messung des Leitwerts, insbesondere um ein elektrisches Messsignal S zu erhalten, das den Leitwert angibt. Die Vorrichtung zur Messung des Leitwerts kann insbesondere einen logarithmierenden Verstärker aufweisen, um zum Logarithmus des Leitwerts proportionales Messsignal zu erhalten.

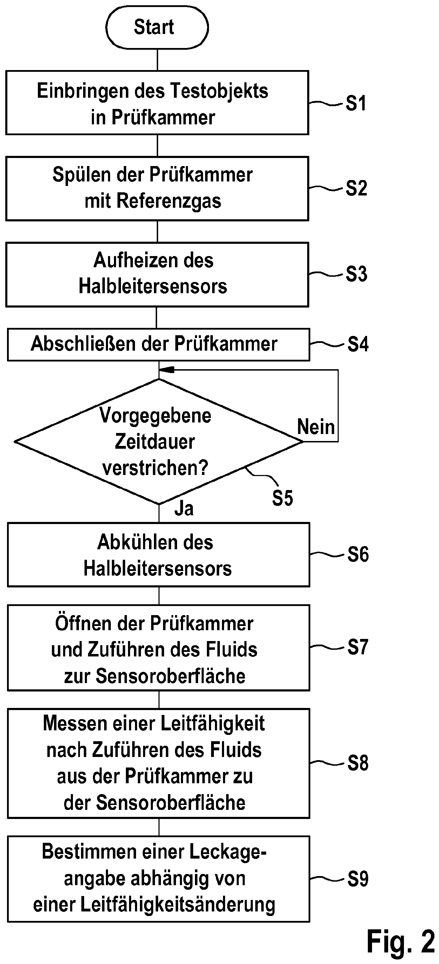

In Figur 2 ist ein Flussdiagramm zur Veranschaulichung eines Verfahrens zur Messung einer Leckageangabe mithilfe der Leckagemessvorrichtung 1 der Figur 1 näher erläutert.

Das beschriebene Beispiel geht von einem Halbleitergassensor 91' in Form eines SnO2-Sensors, einem gasförmigen Prüffluid 21, wie z. B. Formiergas, Wasserstoff oder Ethanol, das in dem Testobjekt 2 eingebracht ist, und von aufbereiteter Luft als Referenzfluid 31 aus.

In Schritt S1 wird das Testobjekt 2 in die Prüfkammer 3 eingebracht. Anschließend wird in Schritt S2 zunächst die Prüfkammer 3 mit dem aufbereiteten Referenzfluid 31 gespült. Das Referenzfluid 31 ist dabei so aufbereitet, dass die Konzentration von Stoffen, auf die der Halbleitergassensor 91' mit der Änderung der elektrischen Eigenschaft reagiert, möglichst gering ist, um Störeinflüsse auf die Messung zu vermeiden.

In Schritt S3 wird der Halbleitergassensor 91' mithilfe der Heizeinrichtung 92, insbesondere durch Zufuhr von elektrischer Energie, auf eine Anregungstemperatur von beispielsweise zwischen 350° und 500° aufgeheizt, um diesen in eine Hochtemperaturphase zu versetzen. Dabei werden Reaktionsstellen ausgebildet.

Anschließend wird in Schritt S4 die Prüfkammer 3 abgeschlossen und gegebenenfalls mit einem bestimmten Innendruck beaufschlagt.

Anschließend wird in Schritt S5 überprüft, ob eine vorgegebene Akkumulationszeit verstrichen ist. Während dieser Zeit tritt im Falle einer Leckage das Prüffluid 21 in den Innenraum der Prüfkammer 3 aus, und zwar mit einem von dem Druck des Prüffluids 21 und dem Druck des Referenzfluids 31 und dem Leckageöffnungsquerschnitt abhängigen Leckagerate. Dabei reichert sich die Menge an Prüffluid 21 in dem Referenzfluid 31 innerhalb der Prüfkammer 3 an. Soll die Leckage nur qualitativ bestimmt werden, ist die Anordnung des Testobjekts 2 in der Prüfkammer 3 für die vorgegebene Akkumulationszeit unerheblich.

Ist die vorgegebene Akkumulationszeit verstrichen (Alternative: Ja), wird das Verfahren mit Schritt S6 fortgesetzt, anderenfalls wird zu Schritt S5 zurückgesprungen.

In Schritt S6 wird die Heizeinrichtung 92 deaktiviert, um den Halbleitergassensor 91' schnell abzukühlen. Zusätzlich kann ein Kühlelement, z. B. ein Peltier-Kühlelement, vorgesehen sein, um den Abkühlprozess für den Halbleitergassensor 91' zu beschleunigen und diesen sehr schnell auf die Detektionstemperatur von zwischen 100°C und 300°C zu bringen. Dabei werden die Oberflächenzustände des Halbleitergassensors in ein thermodynamisches Ungleichgewicht gebracht, so dass für in das Referenzfluid 31 ausgetretenes Prüffluid eine hohe Anzahl von möglichen Reaktionsstellen zur Verfügung steht.

In Schritt S7 wird durch Öffnen des Zuführventils 5 und des Abführventils 8 durch weitere Zufuhr von Referenzfluid 31 ein vorbestimmter Anteil des kontaminierten Referenzfluids 31 innerhalb der Prüfkammer 3 über die Fluidabführung zu der Sensoroberfläche 93 des Halbleitergassensors 91' geleitet.

Insbesondere wird durch Zufuhr von Referenzfluid 31 in die Prüfkammer 3 das in der Prüfkammer 3 befindliche kontaminierte Referenzfluid 31 ausgestoßen und über die Fluidabführung 7 zur Sensoroberfläche 93 transportiert. Dies wird für eine vorbestimmte Messzeitdauer durchgeführt. Am Halbleitergassensor 91' reagiert das eventuell aus dem Testobjekt 2 ausgetretene Prüffluid mit den freien Reaktionsstellen auf der Sensoroberfläche 93.

Da der Leitwert des Halbleitergassensors 91' von der Anzahl der freien Reaktionsstellen an der Sensoroberfläche abhängt, erfolgt bei diesem Prozess eine Leitwertverringerung, die von der Fluidmenge des Prüffluids 21, die auf die Sensoroberfläche 93 des Halbleitergassensors 91' geleitet wird, abhängt. Daher wird in Schritt S8 der Leitwert des Halbleitergassensors 91' gemessen und eine Leitwertsänderung über die Messzeitdauer bestimmt.

In Schritt S9 aus der bestimmten Leitwertsänderung eine Menge eines während der Akkumulationszeit aus dem Testobjekt 2 ausgetretenes Prüffluids 21 als Leckageangabe bestimmt.

Da der Abbau der freien Reaktionsstellen auf der Sensoroberfläche 93 ohne reduzierendes Gas, wie z. B. Wasserstoff oder VOCs aus dem Prüffluid 21, nur sehr langsam abläuft, können bereits geringe Konzentrationen des Prüffluids 21 in dem Referenzfluid 31 einen großen Beitrag zur Relaxation der Sensoroberfläche leisten. Da die Anzahl der Reaktionsstellen, die das thermodynamische Ungleichgewicht bewirken, begrenzt ist, kann über die Zufuhr des kontaminierten Referenzfluids 31 an die Sensoroberfläche 93 die erfolgenden Bindungen/Reaktion der Prüffluidatome/-moleküle an die Reaktionsstellen die Menge des Prüffluids 21 in dem Referenzfluid 31 abgeschätzt werden. Daher wird über dieses Verfahren nicht die Konzentration des Prüffluids 21 in dem Referenzfluid 31, sondern die Dosis des Prüffluids 21, die während der Akkumulationszeit aus dem Testobjekt 2 in die Prüfkammer 3 ausgetreten ist, bestimmt. Insbesondere ergibt für die Akkumulation des Prüffluids 21 in dem Referenzfluid 31:

$$n_{Test} = \frac{1}{RT} \int_{t_0}^{t_1} Q \, dt$$

wobei Q einer Leckagerate, R der Gaskonstante und T der Detektionstemperaturentsprechen. $n_{Test}$ entspricht der Stoffmenge des Prüffluids 21, die während der Akkumulationszeit zwischen $t_0$ und $t_1$ von dem Testobjekt 2 abgegeben wird.

Anschließend wird mithilfe einer Fließinjektionsanalyse ein Stoffmengenstrom $\dot{n}$ während einer zweiten Zeitdauer zwischen einem Zeitpunkt $t_1$ und einem Zeitpunkt $t_2$ dem Halbleitergassensor 91' zugeführt, während der sich daraufhin eine Leitfähigkeitsänderung $\Delta S$ als Änderung der elektrischen Größe ergibt. Bei einem Halbleitergassensor in der beschriebenen Ausführung wird der Leitwert durch Korngrenzen bestimmt. Für den Abbau eines Ungleichgewichtszustand gilt dann:

$$\frac{G(t_2)}{G(t_1)} = e^{k \int_{t_1}^{t_2} c \, dt}$$

Vorzugsweise wird die Änderung des Leitwerts durch ein elektrisches Messsignal S(t) erfasst. Das elektrische Signal S(t), das mithilfe eines Halbleitergassensors erfasst wird, entspricht dem Logarithmus des Leitwerts.

$$\ln\left(\frac{G(t1)}{G(t2)}\right) = \ln\left(G(t1)\right) - \ln\left(G(t2)\right)$$

Das elektrische Signal $\Delta S$ ergibt sich wie folgt:

$$\Delta S = S(t_2) - S(t_1) = k \int_{t_1}^{t_2} c \, dt$$

$$c = \frac{\Delta S}{k(t_2 - t_1)}$$

wobei $S(t_2)$ einem bekannten Referenzwert des elektrischen Messsignals im angeregten Zustand des Halbleitergassensors 91' bei Detektionstemperatur, k einer parametrierbaren Konstante und c der Konzentration des Prüffluids 21 im Referenzfluid 31 entsprechen, wobei

$$c = \frac{\dot{n}}{\dot{V}}$$

$$V_{Test} = \int_{t_1}^{t_2} \dot{V}\, dt$$

Der injizierte Stoffmengenstrom $\dot{n}$ wird über die Messzeitdauer $t_2 - t_1$ integriert, um die Prüfstoffmenge $n_{Test}$ des Prüffluids 21 zu erhalten.

$$n_{Test} = \int_{t_1}^{t_2} \dot{n}\, dt \text{ mit } \dot{n} = \begin{cases} 0 \text{ für } t < t_1 \\ > 0 \text{ für } t_1 \leq t \leq t_2 \end{cases}$$

unter der Annahme, dass der Volumenstrom $\dot{V}$ und der darin enthaltene Stoffmengenstrom des Prüfstoffes $\dot{n}$ während der Beaufschlagung des Halbleitergassensors 91' mit dem kontaminierten Referenzfluid 31 konstant sind. Mit dem obigen Verfahren wird direkt das Integral über die Konzentration c bestimmt bzw. es wird die Dosis der ausgetretenen Stoffmenge $n_{Test}$ an Prüffluid 21 gemessen. Während bei bisherigen Konzentrationsmessverfahren das Sensorsignal nicht linear zur gemessenen Konzentration ist und damit die Abbildung des Sensorsignals auf die Konzentration eine nichtlineare Transferfunktion benötigt, kann mithilfe der linearen Messsignalcharakteristik zwischen Messsignaländerung, d.h. der logarithmierten Leitwertsänderung, und detektierten Stoffmenge des Prüffluids 21 die Leckagerate des Prüffluids 21 als Leckageangabe in einfacher Weise quantifiziert werden.

Ein mögliches alternatives Messverfahren besteht darin, nach der Akkumulationszeit zum Zeitpunkt t1 einen konstanten Fluidstrom $\dot{V}$ in die Testkammer 3 zu leiten. Es wird gleichzeitig zum Zeitpunkt t1 eine Zeitmessung gestartet und die Änderung des Messsignals $\Delta S$ überwacht, die Messung wird gestoppt, wenn das Messsignal einen Schwellenwert $S_{lim}$ erreicht, der über dem Wert des Messsignals des Fluidsensors 91, 91' bei der Detektionstemperatur im relaxierten Zustand gewählt ist. Der Messzeitpunkt $t_m$ des Stoppens der Messung wird erfasst. Durch ein solches Messverfahren kann ein großer Messbereich für die Messsignaländerung $\Delta S$ des Fluidsensors 91 im angeregten Zustand genutzt werden.

$$\frac{\dot{V} \cdot \Delta S}{k(t_m - t_1)} = \dot{n} \text{ oder } c = \frac{\Delta S}{k(t_m - t_1)}$$

Wird ein Erreichen des Messsignalschwellenwerts $S_{lim}$ durch das Messsignal innerhalb einer Messzeitdauer erreicht, die unter einem vorgegebenen Messzeitdauerschwellenwert liegt, so kann von einer hohen Leckagerate ausgegangen werden. Daher kann die begonnene Messung durch kontinuierliches Durchströmen der Prüfkammer 3 mit dem Referenzfluid 31 insbesondere ohne Unterbrechung fortgesetzt werden, bis der Fluidsensor 9 sich nicht mehr in dem angeregten Zustand befindet. Durch das sich dann einstellende Signal kann eine Messung der Konzentration des Prüffluids 21 in dem Referenzfluid 31 unmittelbar in an sich bekannter Weise vorgenommen werden, nämlich indem eine Signaldifferenz zu einem Referenzsignal bei Detektionstemperatur im relaxierten Zustand einer Prüffluidkonzentration zugeordnet wird.

Das obige Verfahren ist störempfindlich auf Änderung einer Konzentration von Störstoffen in dem Referenzfluid 31 ist, wenn der Fluidsensor 91 empfindlich für die Störstoffe ist. In Raumluft, und damit auch in der normalerweise verwendeten Druckluft zur Spülung der Prüfkammern, ist eine Wasserstoffkonzentration von mindestens 500 ppb und eine Änderung um einige Hundert ppb zu erwarten. Außerdem gibt es weiterhin eine große Vielzahl von Wasserstoffquellen, die zum Teil sehr lokal und kurzfristig sind, dazu gehören biologische Quellen, Elektrolyse sowie die meisten Verbrennungsprozesse.

Der Fluidsensor 91, 91' des obigen Ausführungsbeispiels reagiert sensitiv auf Wasserstoff. Zum Minimieren von daraus resultierenden Störeinflüssen kann zum einen eine Differenzmessung vorgenommen werden. Dabei wird eine Kalibriermessung ohne Testobjekt durchgeführt, die den Anteil von Störstoffen in dem Referenzfluid 31 und das Relaxationsverhalten des Fluidsensors 91, 91' misst und entsprechend bei der Auswertung der Messung berücksichtigt. Im Prinzip kann dazu unmittelbar nach der Anregung des Fluidsensors 91, 91' eine Messsignaländerungsfunktion $S_{Kal}(t)$ über der Zeit ermittelt werden, die sich ohne Beaufschlagung des zu detektierenden Prüfstoffes auf den Fluidsensor 91, 91' ergibt.

Somit kann die Messsignaländerung $\Delta S'$, die der Beaufschlagung des Fluidsensors 91, 91' mit dem Prüffluid 21 zuzurechnen ist, ermittelt werden als:

$$\Delta S' = \int_{t_1}^{t_2} c\, dt - S_{Kal}(t_2 - t_1)$$

Als weitere Möglichkeit kann die Prüfstoffmenge in der Testkammer 3 ohne oder mit Testobjekt 2 in gleicher Weise gemessen und die Differenz der Messungen der Messsignale S(t) ausgewertet werden.

Alternativ kann das Referenzfluid 31 aufbereitet werden, beispielsweise mithilfe eines Nullluftgenerators, z. B. einem katalytischen Konverter, oder einer Filterung des Referenzfluids 31 mittels Aktivkohle.

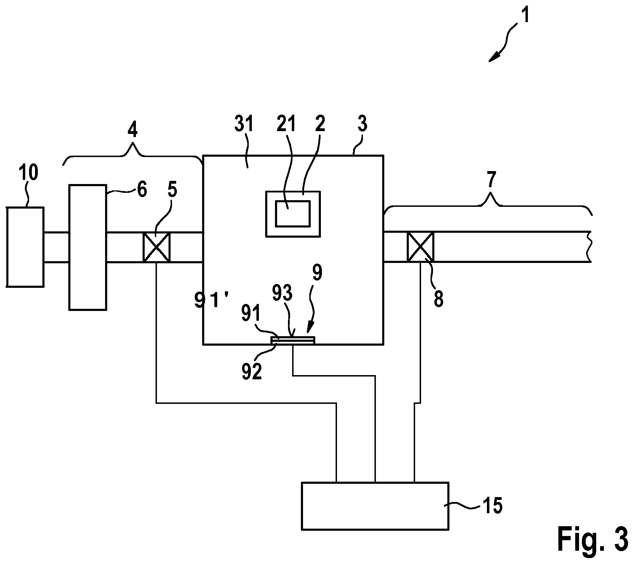

In einer weiteren Ausführungsform, die in Figur 3 schematisch dargestellt ist, kann im Unterschied zur Ausführungsform der Figur 1 der Fluidsensor 9 innerhalb der Prüfkammer 3 angeordnet sein. Das Messverfahren erfolgt hier so, dass während des Anregens des Fluidsensors 9 die Prüfkammer 3 mit dem Referenzfluid 31 gespült wird. Wird die Energiezufuhr zu dem Fluidsensors gestoppt und/oder die Detektionstemperatureingestellt, um den Fluidsensor 91, 91' für die Messung in einem thermodynamischen Ungleichgewicht zu versetzen, wird die Zufuhr von Referenzfluid 31 ebenfalls gestoppt, so dass das ab diesem Zeitpunkt aus dem Testobjekt austretende Prüffluid 21 an die Sensoroberfläche gelangt. Die Höhe der Messsignaländerung innerhalb der Messzeitdauer kann wie oben beschrieben einer Menge an während der Messzeitdauer aus dem Testobjekt ausgetretenen Prüffluid 21 zugeordnet werden.

**Patentansprüche**

1. Verfahren zur Leckagemessung eines mit Prüffluid (21) gefüllten bzw. füllbaren Testobjekts (2), mit folgenden Schritten:

   - Anordnen (S1) des Testobjekts (2) in einer abgeschlossenen, mit einem Referenzfluid (31) gefüllten Prüfkammer (3), um etwaig austretendes Prüffluid (21) in dem in der Prüfkammer (3) befindlichen Referenzfluid (31) anzureichern;
   - Betreiben (S3, S6) eines auf zumindest einen Bestandteil des Prüffluids (21) sensitiven Fluidsensors (91, 91'), um diesen durch Energiezufuhr durch Erwärmen auf eine Anregungstemperatur, durch Beaufschlagen mit einem elektrischen Feld, durch optische Anregung oder durch elektrochemisches Pumpen anzuregen, so dass eine ein thermodynamisches Gleichgewicht übersteigende Menge chemischer Reaktionspartner auf einer Sensoroberfläche des Fluidsensors (91, 91') ausgebildet wird, wobei der Fluidsensor (91, 91') nach erfolgter Anregung in einen Messzustand gebracht wird, in dem ein thermodynamisches Ungleichgewicht hinsichtlich chemischer Reaktionspartner auf der Sensoroberfläche (93) des Fluidsensors (91, 91') zumindest während einer Messzeitdauer besteht, wobei die das thermodynamische Gleichgewicht übersteigende Menge chemischer Reaktionspartner eine elektrische Eigenschaft des Fluidsensors (91, 91') beeinflusst;
   - nach erfolgter Anregung des Fluidsensors (91, 91'), Beaufschlagen (S7) der Sensoroberfläche (93) mit zumindest einem Teil des etwaig mit Prüffluid (21) kontaminierten Referenzfluids (31) für die Messzeitdauer, so dass das thermodynamische Ungleichgewicht durch Beaufschlagen mit entsprechenden Bestandteilen des Prüffluids abgebaut wird und sich aufgrund einer Wechselwirkung des Prüffluids (21) mit den Reaktionspartnern eine Änderung einer elektrischen Eigenschaft ergibt,
   - Ermitteln (S8, S9) einer Leckageangabe abhängig von der Änderung der elektrischen Eigenschaft des Fluidsensors (91, 91') aufgrund des Beaufschlagens der Sensoroberfläche (93) mit dem kontaminierten Referenzfluid (31) während der Messzeitdauer.

2. Verfahren nach Anspruch 1, wobei das Referenzfluid (31) in der Prüfkammer (3) durch etwaig aus dem Testobjekt (2) austretendes Prüffluid (21) für eine vorbestimmte Akkumulationszeit angereichert wird und anschließend das kontaminierte Referenzfluid (31) zur Beaufschlagung der Sensoroberfläche (93) des Fluidsensors (91, 91') mit einem vorbestimmten, insbesondere konstanten Volumenstrom, insbesondere durch Hindurchleiten von weiterem Referenzfluid (31) durch die Prüfkammer (3), zugeführt wird.

3. Verfahren nach Anspruch 2, wobei die Leckageangabe einer Angabe über die während der Akkumulationszeit ausgetretene Stoffmenge des Prüffluids (21) oder einem Leckagestrom des Prüffluids (21) entspricht und/oder wobei die Leckageangabe weiterhin abhängig von dem Teil des Volumens des Referenzfluids (31), mit dem die Sensoroberfläche (93) beaufschlagt wird, aus der Prüfkammer (3) ermittelt wird.

4. Verfahren nach einem der Ansprüche 2 bis 3, wobei die Änderung der elektrischen Eigenschaft einer Leitwertsänderung, einer Kapazitätsänderung oder einer Änderung eines Sättigungsstromes des Fluidsensors (91, 91') entspricht, wobei die Änderung der elektrischen Eigenschaft während der Messzeitdauer ermittelt und einer Stoffmenge an ausgetretenem Prüffluid (21) zugeordnet wird, wobei die Leckageangabe insbesondere abhängig von der Stoffmenge und abhängig von der Akkumulationszeit angegeben wird.

5. Verfahren nach Anspruch 1, wobei das Referenzfluid (31) in der Prüfkammer (3) durch etwaig aus dem Testobjekt (2) austretendes Prüffluid (21) für die Messzeitdauer angereichert wird, wobei der Fluidsensor (91, 91') in der Prüfkammer (3) angeordnet und so die Sensoroberfläche (93) durch das austretende Prüffluid (21) während der Messzeitdauer beaufschlagt wird.

6. Verfahren nach Anspruch 5, wobei die Änderung der elektrischen Eigenschaft einer Leitwertsänderung, einer Kapazitätsänderung oder einer Änderung eines Sättigungsstromes des Fluidsensors (91, 91') entspricht, wobei die Änderung der elektrischen Eigenschaft während der Messzeitdauer ermittelt und einer Stoffmenge an ausgetretenem Prüffluid (21) zugeordnet wird, wobei die Leckageangabe insbesondere abhängig von der Stoffmenge und abhängig von der Messzeitdauer angegeben wird.

7. Verfahren nach einem der Ansprüche 2, 3 und 5, wobei eine Leitwertsänderung, eine Kapazitätsänderung oder eine Änderung eines Sättigungsstroms des Fluidsensors (91, 91') während des Beaufschlagens des Fluidsensors (91, 91') überwacht wird, wobei die Messung gestoppt wird, wenn die gemessene Änderung einen vorgegeben Schwellenwert erreicht, und wobei die Messzeitdauer durch den Zeitpunkt des Beginns des Beaufschlagens des Fluidsensors (91, 91') und den Zeitpunkt des Stoppens der Messung bestimmt ist, wobei die Leckageangabe abhängig von der Messzeitdauer angegeben wird.

8. Verfahren nach einem der Ansprüche 1 bis 7, wobei das Prüffluid (21) einen reduzierenden Bestandteil, insbesondere Wasserstoff und/oder Ethanol, enthält und der Fluidsensor (91, 91') als Gassensor, insbesondere als Halbleitergassensor (91'), ausgebildet ist, um durch eine Temperaturmodulation eine das thermodynamische Gleichgewicht übersteigende Menge von chemisorbierten Sauerstoff auf der Sensoroberfläche (93) auszubilden, der mit dem reduzierenden Bestandteil, insbesondere dem Wasserstoff und/oder dem Ethanol, aus dem Prüffluid (21) reagieren kann.

9. Verfahren nach einem der Ansprüche 1 bis 8, wobei das Referenzfluid (31) vor Einbringen in die Prüfkammer (3) so gewählt ist, dass dieses keine Bestandteile aufweist, auf die der Fluidsensor (91, 91') sensitiv ist, oder wobei das Referenzfluid (31) vor Einbringen in die Prüfkammer (3) gereinigt und/oder gefiltert wird, um den Anteil an Bestandteilen des Referenzfluids (31), auf die der Fluidsensor (91, 91') sensitiv ist, zu reduzieren oder zu eliminieren.

10. Verfahren nach einem der Ansprüche 1 bis 9, wobei das kontaminierte Referenzfluid (31) vor dem Beaufschlagen auf die Sensoroberfläche (93) gereinigt oder gefiltert wird, um Stoffe, die nicht Bestandteil des Prüffluids (21) sind aber auf die der Fluidsensor (91, 91') sensitiv ist, zu entfernen.

11. Verfahren nach einem der Ansprüche 1 bis 10, wobei eine Referenzangabe ermittelt wird, indem der auf das Prüffluid (21) sensitive Fluidsensor (91, 91') zum Ausbilden einer ein thermodynamisches Gleichgewicht übersteigenden Menge an Reaktionspartnern auf einer Sensoroberfläche betrieben wird und der Sensoroberfläche (93) nicht kontaminiertes Referenzfluid (31) in einer Menge zugeführt wird, die dem während der Messung der Sensoroberfläche (93) zugeführten Teil des kontaminierten Referenzfluids (31) aus der Prüfkammer (3) entspricht, und die Leckageangabe abhängig von der Referenzangabe ermittelt wird.

12. Messvorrichtung zur Leckagemessung eines Testobjekts (2), umfassend:

- eine mit einem Referenzfluid (31) befüllbare Prüfkammer (3) zum Aufnehmen des Testobjekts (2);
- ein auf das Prüffluid (21) sensitiver Fluidsensor (91, 91'), der ausgebildet ist, um diesen durch Energiezufuhr durch Erwärmen auf eine Anregungstemperatur, durch Beaufschlagen mit einem elektrischen Feld, durch optische Anregung oder durch elektrochemisches Pumpen anzuregen, so dass eine ein thermodynamisches Gleichgewicht übersteigende Menge chemischer Reaktionspartner auf einer Sensoroberfläche des Fluidsensors ausgebildet wird, wobei der Fluidsensor (91, 91') nach erfolgter Anregung in einen Messzustand gebracht wird, in dem ein thermodynamisches Ungleichgewicht hinsichtlich chemischer Reaktionspartner auf der Sensoroberfläche (93) des Fluidsensors (91, 91') zumindest während einer Messzeitdauer besteht, wobei die das thermodynamische Gleichgewicht übersteigende Menge chemischer Reaktionspartner eine elektrische Eigenschaft des Fluidsensors (91, 91') beeinflusst;
- eine Steuereinheit (15), die ausgebildet ist, um

    ∘ den Fluidsensor (91, 91') durch Energiezufuhr anzuregen
    ∘ nach erfolgter Anregung des Fluidsensors (91, 91') die Sensoroberfläche (93) zumindest mit einem Teil des etwaig mit Prüffluid (21) kontaminierten Referenzfluids (31) für eine Messzeitdauer zu beaufschlagen, so dass das thermodynamische Ungleichgewicht durch Beaufschlagen mit entsprechenden Bestandteilen des Prüffluids abgebaut wird und sich aufgrund einer Wechselwirkung des Prüffluids (21) mit den Reaktionspartnern eine Änderung einer elektrischen Eigenschaft ergibt,

∘ eine Leckageangabe abhängig von der Änderung der elektrischen Eigenschaft des Fluidsensors (91, 91') aufgrund des Beaufschlagens der Sensoroberfläche (93) mit dem kontaminierten Referenzfluid (31) während der Messzeitdauer zu ermitteln.

13. Messvorrichtung nach Anspruch 12, wobei der Fluidsensor (91, 91') einen Halbleitergassensor (91') aufweist, bei dem sich als die elektrische Eigenschaft ein elektrischer Leitwert ändert, wobei ein logarithmierender Verstärker vorgesehen ist, um ein elektrisches Messsignal zu messen, das den logarithmierten Leitwert angibt.

**Claims**

1. A method for leakage measurement of a test object (2) filled or fillable with a test fluid (21), comprising the following steps:

   - arranging (S1) the test object (2) in a closed test chamber (3) filled with a reference fluid (31) in order to enrich any test fluid (21) leaking into the reference fluid (31) of the test chamber (3);
   - operating (S3, S6) a fluid sensor (91, 91') sensitive to at least one constituent of the test fluid (21) to excite it by energizing it by heating to an excitation temperature, by applying an electric field, by optical excitation or by electrochemical pumping so that an amount of chemical reactants exceeding a thermodynamic equilibrium is formed on a sensor surface of the fluid sensor (91, 91'), wherein after excitation the fluid sensor (91, 91') is brought into a measurement state in which a thermodynamic inequilibrium exists with respect to chemical reaction partners on the sensor surface (93) of the fluid sensor (91, 91') at least during a measurement period, wherein the amount of chemical reactants exceeding the thermodynamic equilibrium influences an electrical property of the fluid sensor (91, 91');
   - after excitation of the fluid sensor (91, 91'), applying (S7) the sensor surface (93) with at least a part of the reference fluid (31) possibly contaminated with test fluid (21) for the measurement period, so that the thermodynamic inequilibrium is reduced by applying with corresponding constituents of the test fluid and a change in an electrical property results due to an interaction of the test fluid (21) with the reactants,
   - determining (S8, S9) a leakage indication as a function of the change in the electrical property of the fluid sensor (91, 91') due to the application of the contaminated reference fluid (31) on the sensor surface (93) during the measurement period.

2. The method according to claim 1, wherein the reference fluid (31) in the test chamber (3) is enriched by any test fluid (21) emerging from the test object (2) for a predetermined accumulation time and subsequently the contaminated reference fluid (31) is supplied to apply on the sensor surface (93) of the fluid sensor (91, 91') with a predetermined, in particular constant, volumetric flow, in particular by passing further reference fluid (31) through the test chamber (3).

3. The method according to claim 2, wherein the leakage indication corresponds to an indication of the substance quantity of the test fluid (21) leaked during the accumulation time or to a leakage flow of the test fluid (21) and/or wherein the leakage indication is further determined as a function of the part of the volume of the reference fluid (31), by which the sensor surface (93) is applied, from the test chamber (3).

4. The method according to any one of claims 2 to 3, wherein the change in the electrical property corresponds to a change in conductance, a change in capacitance or a change in a saturation current of the fluid sensor (91, 91'), wherein the change in the electrical property is determined during the measurement period and is associated with a substance quantity of leaked test fluid (21), wherein the leakage indication is indicated in particular as a function of the substance quantity and as a function of the accumulation time.

5. The method according to claim 1, wherein the reference fluid (31) in the test chamber (3) is enriched by any test fluid (21) leaking from the test object (2) for the measurement time period, wherein the fluid sensor (91, 91') is arranged in the test chamber (3) and thus the sensor surface (93) is applied by the leaking test fluid (21) during the measurement time period.

6. The method according to claim 5, wherein the change in the electrical property corresponds to a change in conductance, a change in capacitance or a change in a saturation current of the fluid sensor (91, 91'), wherein the change in the electrical property is determined during the measurement period and is assigned to a substance quantity of leaked test fluid (21), wherein the leakage indication is indicated in particular as a function of the substance quantity and as a function of the measurement period.

7. The method according to any one of claims 2, 3 and 5, wherein a change in conductance, a change in capacitance or a change in a saturation current of the fluid sensor (91, 91') is monitored during the application of the fluid sensor (91, 91'), wherein the measurement is stopped, when the measured change reaches a predetermined threshold value, and wherein the measurement time duration is determined by the time of the start of the application of the fluid sensor (91, 91') and the time of the stop of the measurement, the leakage indication being given as a function of the measurement time duration.

8. The method according to one of claims 1 to 7, wherein the test fluid (21) contains a reducing component, in particular hydrogen and/or ethanol, and the fluid sensor (91, 91') is designed as a gas sensor, in particular as a semiconductor gas sensor (91'), in order to form, by means of a temperature modulation, an amount of chemisorbed oxygen exceeding the thermodynamic equilibrium on the sensor surface (93), which can react with the reducing component, in particular the hydrogen and/or the ethanol, from the test fluid (21).

9. The method according to any one of claims 1 to 8, wherein the reference fluid (31) is selected prior to introduction into the test chamber (3) to be free of any constituents to which the fluid sensor (91, 91') is sensitive, or wherein the reference fluid (31) is purified and/or filtered prior to introduction into the test chamber (3) in order to reduce or eliminate the content of constituents of the reference fluid (31) to which the fluid sensor (91, 91') is sensitive.

10. The method according to any one of claims 1 to 9, wherein the contaminated reference fluid (31) is purified or filtered before being applied to the sensor surface (93) to remove substances that are not constituents of the test fluid (21) but to which the fluid sensor (91, 91') is sensitive.

11. The method of any one of claims 1 to 10, wherein a reference indication is determined by operating the fluid sensor (91, 91') sensitive to the test fluid (21) to form an amount of reactants exceeding a thermodynamic equilibrium on a sensor surface and supplying uncontaminated reference fluid (31) to the sensor surface (93) in an amount which corresponds to the portion of the contaminated reference fluid (31) from the test chamber (3) supplied to the sensor surface (93) during the measurement, and the leakage indication is determined as a function of the reference indication.

12. A measuring device for leakage measurement of a test object (2), comprising:

- a test chamber (3) fillable with a reference fluid (31), for receiving the test object (2);
- a fluid sensor (91, 91') sensitive to the test fluid (21) and adapted to excite the fluid sensor (91, 91') by applying energy thereto by heating to an excitation temperature, by applying an electric field, by optical excitation, or by electrochemical pumping so that an amount of chemical reactants exceeding a thermodynamic equilibrium is formed on a sensor surface of the fluid sensor wherein the fluid sensor (91, 91') after excitation is brought into a measurement state in which a thermodynamic inequilibrium exists with respect to chemical reactants on the sensor surface (93) of the fluid sensor (91, 91') at least during a measurement period, wherein the amount of chemical reactants exceeding the thermodynamic equilibrium influences an electrical property of the fluid sensor (91, 91');
- a control unit (15) configured to

- excite the fluid sensor (91, 91') by applying energy;
- after excitation of the fluid sensor (91, 91') applying the sensor surface (93) by at least a part of the reference fluid (31) potentially contaminated with test fluid (21), for a measuring period of time, so that the thermodynamic inequilibrium is reduced by applying with corresponding constituents of the test fluid and a change in an electrical property results due to an interaction of the test fluid (21) with the reactants;
- determining a leakage indication dependent on the change in the electrical property of the fluid sensor (91, 91') due to the application of the contaminated reference fluid (31) on the sensor surface (93) during the measurement period.

13. A measuring device according to claim 12, wherein the fluid sensor (91, 91') comprises a semiconductor gas sensor (91') in which an electrical conductance changes as the electrical property, wherein a logarithmic amplifier is provided to measure an electrical measurement signal indicative of the logarithmic conductance.

**EP 3 527 966 B1**

**Revendications**

1. Procédé de mesure des fuites d'un objet d'essai (2) rempli ou pouvant être rempli de fluide d'essai (21), comprenant les étapes suivantes :

   - la disposition (S1) de l'objet d'essai (2) dans une chambre d'essai fermée (3) remplie d'un fluide de référence (31) afin d'enrichir tout fluide d'essai (21) sortant dans le fluide de référence (31) situé dans la chambre d'essai (3) ;
   - le fonctionnement (S3, S6) d'un capteur de fluide (91, 91') sensible à au moins un composant du fluide d'essai (21) afin de l'exciter par un acheminement d'énergie par chauffage à une température d'excitation, par application d'un champ électrique, par excitation optique ou par pompage électrochimique, de sorte qu'une quantité de partenaires chimiques de réaction dépassant un équilibre thermodynamique est formée sur une surface de capteur du capteur de fluide (91, 91'), le capteur de fluide (91, 91') étant amené, après réalisation de l'excitation, dans un état de mesure dans lequel un déséquilibre thermodynamique par rapport aux partenaires chimiques de réaction existe sur la surface de capteur (93) du capteur de fluide (91, 91') au moins pendant une période de mesure, la quantité de partenaires chimiques de réaction dépassant l'équilibre thermodynamique influençant une propriété électrique du capteur de fluide (91, 91');
   - après la réalisation de l'excitation du capteur de fluide (91, 91'), l'application (S7) d'au moins une partie du fluide de référence (31) éventuellement contaminé par du fluide de test (21) à la surface du capteur (93) pendant la durée de la mesure, de sorte que le déséquilibre thermodynamique est réduit par l'application de constituants correspondants du fluide d'essai et qu'une modification d'une propriété électrique découle d'une interaction du fluide d'essai (21) avec les partenaires de réaction,
   - la détermination (S8, S9) d'une indication de fuite en fonction de la modification de la propriété électrique du capteur de fluide (91, 91') due à l'application du fluide de référence (31) contaminé à la surface du capteur (93) pendant la période de mesure.

2. Procédé selon la revendication 1, dans lequel le fluide de référence (31) dans la chambre d'essai (3) est enrichi pendant un temps d'accumulation prédéterminé par tout fluide d'essai (21) sortant de l'objet d'essai (2) puis le fluide de référence contaminé (31) est acheminé pour l'application à la surface de capteur (93) du capteur de fluide (91, 91') avec un débit volumique prédéterminé, en particulier constant, en particulier en faisant passer un autre fluide de référence (31) à travers la chambre d'essai (3).

3. Procédé selon la revendication 2, dans lequel l'indication de fuite correspond à une indication de la quantité de substance du fluide d'essai (21) qui s'est échappée pendant le temps d'accumulation ou un débit de fuite du fluide d'essai (21) et/ou dans lequel l'indication de fuite est en outre déterminée à partir de la chambre d'essai (3) en fonction de la partie du volume du fluide de référence (31), laquelle est appliquée sur la surface de détection (93).

4. Procédé selon l'une quelconque des revendications 2 à 3, dans lequel la modification de la propriété électrique correspond à une modification de conductance, une modification de capacité ou une modification d'un courant de saturation du capteur de fluide (91, 91'), dans lequel la modification de la propriété électrique est déterminée pendant la période de mesure et associée à une quantité de substance de fluide d'essai (21) échappée, dans lequel l'indication de fuite est indiquée en particulier en fonction de la quantité de substance et en fonction du temps d'accumulation.

5. Procédé selon la revendication 1, dans lequel le fluide de référence (31) dans la chambre d'essai (3) est enrichi pendant la période de mesure par tout fluide d'essai (21) sortant de l'objet d'essai (2), dans lequel le capteur de fluide (91, 91') est disposé dans la chambre d'essai (3) et ainsi le fluide d'essai (21) qui s'échappe est appliqué sur la surface de capteur (93) pendant la période de mesure.

6. Procédé selon la revendication 5, dans lequel la modification de propriété électrique correspond à une modification de conductance, une modification de capacité ou une modification d'un courant de saturation du capteur de fluide (91, 91'), dans lequel la modification de propriété électrique est déterminée pendant la période de mesure et associée à une quantité de substance de fluide d'essai (21) échappée, dans lequel l'indication de fuite est indiquée en particulier en fonction de la quantité de substance et en fonction de la période de mesure.

7. Procédé selon l'une quelconque des revendications 2, 3 et 5, dans lequel une modification de conductance, une modification de capacité ou une modification d'un courant de saturation du capteur de fluide (91, 91') est surveillée pendant l'application au capteur de fluide (91, 91'), dans lequel la mesure est arrêtée lorsque la variation mesurée atteint une valeur seuil prédéterminée, et dans lequel la durée de mesure est déterminée par l'instant auquel

13

commence l'application au capteur de fluide (91, 91') et l'instant auquel la mesure est arrêtée, dans lequel l'indication de fuite est indiquée en fonction de la période de mesure.

8. Procédé selon l'une quelconque des revendications 1 à 7, dans lequel le fluide d'essai (21) contient un composant réducteur, en particulier de l'hydrogène et/ou de l'éthanol, et le capteur de fluide (91, 91') est conçu comme un capteur de gaz, en particulier comme un capteur de gaz semi-conducteur (91'), pour former une quantité d'oxygène chimisorbé qui dépasse l'équilibre thermodynamique sur la surface de capteur (93) au moyen d'une modulation de température, cet oxygène pouvant réagir avec le composant réducteur, en particulier l'hydrogène et/ou l'éthanol, provenant du fluide d'essai (21).

9. Procédé selon l'une quelconque des revendications 1 à 8, dans lequel le fluide de référence (31) est choisi, avant d'être introduit dans la chambre d'essai (3), de telle sorte qu'il ne comporte aucun composant auquel le capteur de fluide (91, 91') est sensible, ou dans lequel le fluide de référence (31) est nettoyé et/ou filtré avant d'être introduit dans la chambre d'essai (3) afin de réduire ou d'éliminer la proportion de constituants du fluide de référence (31) à laquelle le capteur de fluide (91, 91') est sensible.

10. Procédé selon l'une quelconque des revendications 1 à 9, dans lequel le fluide de référence (31) contaminé est nettoyé ou filtré avant d'être appliqué sur la surface du capteur (93) afin d'éliminer les substances qui ne font pas partie du fluide d'essai (21) mais auxquelles le capteur de fluide (91, 91') est sensible.

11. Procédé selon l'une quelconque des revendications 1 à 10, dans lequel une indication de référence est déterminée par le fonctionnement du capteur de fluide (91, 91') sensible au fluide d'essai (21) pour former, sur une surface de capteur, une quantité de partenaires de réaction qui dépasse un équilibre thermodynamique, et par l'acheminement, à la surface du capteur (93), d'une quantité de fluide de référence (31) non contaminé qui correspond à la partie du fluide de référence (31) contaminé acheminée à la surface de capteur (93) à partir de la chambre d'essai (3) pendant la mesure, et l'indication de fuite est déterminée en fonction de l'indication de référence.

12. Dispositif de mesure pour la mesure de fuite d'un objet d'essai (2), comprenant :

    - une chambre d'essai (3) pouvant être remplie d'un fluide de référence (31) pour recevoir l'objet d'essai (2) ;
    - un capteur de fluide (91, 91') sensible au fluide d'essai (21), qui est conçu pour être excité par l'acheminement d'énergie par chauffage à une température d'excitation, par l'application d'un champ électrique, par excitation optique ou par pompage électrochimique, de sorte qu'une quantité de partenaires chimiques de réaction dépassant l'équilibre thermodynamique est formée sur une surface de capteur du capteur de fluide, le capteur de fluide (91, 91') étant amené, après la réalisation de l'excitation, dans un état de mesure dans lequel un déséquilibre thermodynamique par rapport aux partenaires chimiques de réaction existe sur la surface de capteur (93) du capteur de fluide (91, 91') au moins pendant une période de mesure, la quantité de partenaires chimiques de réaction dépassant l'équilibre thermodynamique influençant une propriété électrique du capteur de fluide (91, 91');
    - une unité de commande (15) qui est conçue

        ∘ pour stimuler le capteur de fluide (91, 91') par un acheminement d'énergie
        ∘ pour, après la réalisation de l'excitation du capteur de fluide (91, 91'), appliquer au moins une partie du fluide de référence (31) éventuellement contaminé par du fluide d'essai (21) à la surface de capteur (93) pendant une période de mesure, de sorte que le déséquilibre est provoqué par l'application des composants correspondants du fluide d'essai et qu'une modification d'une propriété électrique découle d'une interaction du fluide d'essai (21) avec les partenaires de réaction,
        ∘ pour déterminer une indication de fuite en fonction de la modification de la propriété électrique du capteur de fluide (91, 91') due à l'application sur la surface du capteur (93) du fluide de référence (31) contaminé pendant la période de mesure.

13. Dispositif de mesure selon la revendication 12, dans lequel le capteur de fluide (91, 91') présente un capteur de gaz semi-conducteur (91') dans lequel une conductance électrique change en tant que propriété électrique, dans lequel un amplificateur logarithmique est prévu pour mesurer un signal de mesure électrique qui indique la conductance logarithmisée.

Fig. 1

Start

Einbringen des Testobjekts
in Prüfkammer — S1

Spülen der Prüfkammer
mit Referenzgas — S2

Aufheizen des
Halbleitersensors — S3

Abschließen der Prüfkammer — S4

Vorgegebene
Zeitdauer
verstrichen? — Nein — S5

Ja

Abkühlen des
Halbleitersensors — S6

Öffnen der Prüfkammer
und Zuführen des Fluids
zur Sensoroberfläche — S7

Messen einer Leitfähigkeit
nach Zuführen des Fluids
aus der Prüfkammer zu
der Sensoroberfläche — S8

Bestimmen einer Leckageangabe abhängig von
einer Leitfähigkeitsänderung — S9

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10316332 B4
- US 3956923 A
- WO 2010124907 A

- DE 102006016747 A1
- US 2007229294 A1